(19) Europäisches Patentamt
European Patent Office
Office européen des brevets

(11) **EP 3 635 826 B1**

(12) **EUROPÄISCHE PATENTSCHRIFT**

(45) Veröffentlichungstag und Bekanntmachung des Hinweises auf die Patenterteilung:
**28.02.2024 Patentblatt 2024/09**

(21) Anmeldenummer: **18731765.6**

(22) Anmeldetag: **08.06.2018**

(51) Internationale Patentklassifikation (IPC):
*H01S 3/137* (2006.01)    *H01S 3/139* (2006.01)
*H01S 3/1109* (2023.01)    *H01S 3/08* (2023.01)
*H01S 3/106* (2006.01)    *H01S 3/00* (2006.01)
*H01S 3/13* (2006.01)

(52) Gemeinsame Patentklassifikation (CPC):
**H01S 3/139; H01S 3/137;** H01S 3/0014;
H01S 3/08013; H01S 3/1062; H01S 3/1109;
H01S 3/1305; H01S 3/1307; H01S 2301/02

(86) Internationale Anmeldenummer:
**PCT/EP2018/065138**

(87) Internationale Veröffentlichungsnummer:
**WO 2018/224642 (13.12.2018 Gazette 2018/50)**

(54) **VERFAHREN ZUR ERHALTUNG DER SYNCHRONITÄT EINES FOURIER DOMAIN MODE LOCKED (FDML) LASERS**

METHOD FOR MAINTAINING THE SYNCHRONISM OF A FOURIER DOMAIN MODE LOCKED (FDML) LASER

PROCÉDÉ PERMETTANT D'OBTENIR LE SYNCHRONISME D'UN LASER À MODES BLOQUÉS DANS LE DOMAINE DE FOURIER (FDML)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.06.2017 DE 102017209739**

(43) Veröffentlichungstag der Anmeldung:
**15.04.2020 Patentblatt 2020/16**

(73) Patentinhaber: **OPTORES GMBH**
**80339 München (DE)**

(72) Erfinder:
• HUBER, Robert
**23560 Lübeck (DE)**
• PFEIFFER, Tom
**80805 München (DE)**

(74) Vertreter: **RCD-Patent**
**Giesen, Schmelcher & Griebel**
**Patentwanwälte PartG mbB**
**Kaiserstraße 100**
**52134 Herzogenrath (DE)**

(56) Entgegenhaltungen:
**US-A1- 2009 174 931**

• LI FENG ET AL: "Monitoring the frequency detune of harmonically modelocked Fourier domain mode locked fiber laser using the supermode noise peaks", 2014 CONFERENCE ON LASERS AND ELECTRO-OPTICS (CLEO) - LASER SCIENCE TO PHOTONIC APPLICATIONS, THE OPTICAL SOCIETY, 8. Juni 2014 (2014-06-08), Seiten 1-2, XP032707760, [gefunden am 2014-12-16]
• SLEPNEVA SVETLANA ET AL: "Convective Nozaki-Bekki holes in a long cavity laser", PROCEEDINGS OF SPIE, SPIE, 1000 20TH ST. BELLINGHAM WA 98225-6705 USA, Bd. 9732, 9. März 2016 (2016-03-09), Seiten 97320F-97320F, XP060068871, ISSN: 0277-786X, DOI: 10.1117/12.2209403 ISBN: 978-1-5106-1533-5

**Beschreibung**

Die Erfindung betrifft ein Verfahren zur Erhaltung der Synchronität eines Fourier Domain Mode Locked, FDML, - Lasers.

Ein FDML-Laser weist wenigstens einen Resonator mit wenigstens einem veränderbar wellenlängenselektiven optischen Filter auf, wobei das Laserlicht im Resonator mit einer Umlauffrequenz umläuft und der Filter wiederholt mit einer Abstimmrate in seiner Wellenlängenselektivität verändert wird. Als Abstimmrate wird hier die mittlere Anzahl der Durchläufe des Filters über seine Abstimmbandbreite pro Zeiteinheit bezeichnet. Wird der Filter, z.B. mittels einer elektronischen Ansteuerung, strikt periodisch abgestimmt, spricht man auch von der Abstimmfrequenz.

Für den kontinuierlichen Betrieb des Lasers ist es wesentlich, dass die Abstimmrate des Filters mit der Umlauffrequenz des Laserlichts synchron ist, damit jede der umlaufenden Wellenlängen den Filter zu einem Zeitpunkt wieder erreicht, an dem der Filter für eben diese Wellenlänge gerade durchlässig ist. Von der Synchronität eines FDML-Lasers kann gesprochen werden, wenn die Abstimmrate möglichst genau ein ganzzahliges Vielfaches der Umlauffrequenz ist - unter Vernachlässigung chromatischer Dispersion. Ein FDML-Laser emittiert somit Licht, dessen Wellenlänge repetierend verändert wird. Ein Wellenlängendurchlauf wird auch im Deutschen üblich als "sweep" bezeichnet. Laserlichtquellen, die Licht mit repetierenden Wellenlängendurchläufen emittieren, heißen gängig "swept-source".

Ein FDML-Laser zeichnet sich dadurch aus, dass er Lasermoden für alle den Filter passierenden Wellenlängen ausbilden und emittieren und somit als eine swept-source Licht mit zeitlich variabler Wellenlänge, großer Kohärenzlänge, kleiner Linienbreite und hoher spektraler Energiedichte erzeugen kann. Die Sweep-Rate des FDML-Lasers - entsprechend der Abstimmrate des Filters - liegt dabei sehr hoch; sie entspricht wenigstens seiner Umlauffrequenz. FDML-Laser sind deshalb bevorzugte Lichtquellen für die Fourier-Domain Optical Coherence Tomography, FD-OCT, die heute weite Anwendung in der Materialprüfung und in der medizinischen Bildgebung findet.

Ein Beispiel für ein Verfahren zur Stabilisierung des Betriebs eines FDML- Lasers ist in US 2009/174931 A1 offenbart. Ein Photodetektor empfängt ein gepulstes Lasersignal von einem Laserausgang des Lasers um einen bestimmen Parameter zu messen. Ein Komparator vergleicht den gemessenen Parameter mit einem Vergleichsparameter, um als Reaktion auf ein Vergleichsergebnis ein Fehlersignal zu erzeugen. Eine mit dem Komparator verbundene Lasersteuerung erzeugt ein Steuersignal, um die Betriebsparameter des Lasers als Reaktion auf das Fehlersignal zu steuern.

Optische Filter, die sich in sehr kurzer Zeit über ihre Abstimmbandbreite hinweg abstimmen lassen, sind beispielsweise nach Art eines Fabry-Perot-Interferometers ausgestaltet und an sich bekannt, etwa aus der Druckschrift EP 2 557 441 A1. Beispielsweise lassen sich damit Abstimmraten bis zu 1 MHz realisieren.

Die Umlauffrequenz des Laserlichts im Resonator des FDML-Lasers soll einem ganzzahligen Bruchteil der Abstimmrate entsprechen und ist insofern durch den Filter nach oben begrenzt. Dies erfordert einen Resonator mit einer optischen Weglänge zwischen mehreren 100 Metern bis hin zu Kilometern. Zur Realisierung wird das Laserlicht gewöhnlich in einem Resonator geführt, der eine ausreichend lange, aufgewickelte Glasfaser als Verzögerungsstrecke ("delay line") umfasst. Eine solche Faser führt zugleich chromatische Dispersion ein.

Praktische Aufbauten von FDML-Lasern sind beispielsweise bekannt aus den Druckschriften US 7,414,779 B2 und US 8,315,282 B2 und üblich vollständig faserbasiert. In diesen Beispielen ist neben einem abstimmbaren Filter auch ein optisch oder elektrisch gepumptes laseraktives Medium ("gain medium") in die Licht führende Faser integriert.

Die chromatische Dispersion kann für eine möglichst gleichbleibende Lichtintensität über alle emittierten Wellenlängen apparativ kompensiert werden. Dies ist in einem FDML-Laser mit faserbasierter Verzögerungsstrecke beispielsweise möglich durch passive Komponenten, die in die Verzögerungsstrecke integriert werden und wellenlängenselektiv Lichtanteile in zusätzliche Verzögerungsstrecken einkoppeln, siehe etwa Desmond C. Adler, Wolfgang Wieser, Francois Trepanier, Joseph M. Schmitt, and Robert A. Huber, "Extended coherence length Fourier domain mode locked lasers at 1310 nm", Opt. Express 19, 20930-20939 (2011). Im Kontext dieser Beschreibung wird von einem dispersionskompensierten Resonator gesprochen, wenn der Resonator apparative Ausgestaltungen aufweist, die der Kompensation der chromatischen Dispersion dienen sollen.

Die bereits genannten Druckschriften US 7,414,779 B2 und US 8,315,282 B2 beschreiben die Komponenten und Varianten von FDML-Lasern sehr ausführlich. Überdies sind der US 8,315,282 B2 auch Hinweise auf eine Regelung der Abstimmrate des optischen Filters aus dem ausgekoppelten Lichts des FDML-Lasers im Sinne einer Rückkopplung zu entnehmen, um die Übereinstimmung der Abstimmrate mit einem ganzzahligen Vielfachen der Umlauffrequenz einzurichten und im laufenden Betrieb beizubehalten. Die Regelung orientiert sich dabei an einer Intensitätsmessung eines ausgekoppelten Anteils der im Resonator umlaufenden Strahlung. Intensitätsfluktuationen werden als Funktion der Zeit erfasst und integriert, um einen Rauschwert zu ermitteln, dessen Minimierung dann das Regelungsziel ist. Der fortlaufende Regelungsbedarf ergibt sich aus der Tatsache, dass die Umlauffrequenz von Störeinflüssen auf die fasergebundene Verzögerungsstrecke abhängt und sich während des laufenden Betriebes ändern kann.

Die Regelung wird üblich auf die Abstimmrate ausgerichtet sein, die sich durch Modifikation der elektronischen Ansteuerung des Filters besonders einfach kontrollieren lässt. Zu den dominanten Störeinflüssen zählen auch Schwankungen der Umgebungstemperatur der Faser, was alternativ die Möglichkeit eröffnet, die Synchronität des Lasers z.B. durch eine Temperaturkontrolle der Faser herzustellen.

Wie sich inzwischen gezeigt hat, ist die herkömmliche Regelung aber noch nicht genau genug.

Bei der Untersuchung der ausgekoppelten Strahlung eines herkömmlich synchron laufenden FDML-Lasers nach dem Stand der Technik mit einem hochauflösenden Oszilloskop (50 GHz Detektionsbandbreite) ist von den Erfindern entdeckt worden, dass der Laser während jedes Sweeps sehr viele Male für sehr kurze Zeiten - im Subnanosekundenbereich - abschaltet. Dieses Abschalten führt nicht nur zu sehr schnellen Intensitätsschwankungen, sondern vor allem auch zu einer verringerten Kohärenz der Laserstrahlung, weil sich immer wieder neu Lasermoden aufbauen müssen. Beim händischen Variieren der Abstimmrate des Filters zeigen sich Hinweise auf einen extrem empfindlichen Zusammenhang zwischen den Abschaltungen und der Synchronität des Lasers. So führen bei einer Umlauffrequenz von einigen Hundert Kilohertz bereits Variationen der Abstimmrate um einige Millihertz zu vermehrten Abschaltungen und somit zu einer deutlichen Verschlechterung der Laseremission. Derartig kleine Variationen ergeben sich in der Umlauffrequenz schon bei Temperaturschwankungen der Faser um etwa ein Tausendstel Grad.

Die Erfindung stellt sich deshalb die Aufgabe, ein Verfahren zur Regelung eines FDML-Lasers zu schaffen, das den dauerhaften, stabilen Betrieb des Lasers mit geringerem Rauschen und höherer Kohärenz als im Stand der Technik gestattet.

Die Aufgabe wird gelöst durch ein Verfahren zur Erhaltung der Synchronität eines Fourier Domain Mode Locked, FDML, Lasers, wobei der FDML Laser wenigstens einen dispersionskompensierten Resonator mit wenigstens einem veränderbar wellenlängenselektiven optischen Filter aufweist, wobei das Laserlicht im Resonator mit einer Umlauffrequenz umläuft und der Filter wiederholt mit einer Abstimmrate in seiner Wellenlängenselektivität verändert wird, wobei der FDML Laser synchron ist, wenn die Abstimmrate ein ganzzahliges Vielfaches der Umlauffrequenz beträgt, gekennzeichnet durch die Schritte

  a. Auskoppeln wenigstens eines Anteils des Laserlichts aus dem Resonator;
  b. Erfassen wenigstens eines Anteils des ausgekoppelten Laserlichts mit wenigstens einem Fotodetektor;
  c. Zählen von Ausschlägen im Messsignal des Fotodetektors während aufeinander folgender Zählzeitintervalle, wobei bei Auftreten eines Intensitätseinbruchs der Zähler erhöht wird, wenn das Auftreten innerhalb eines vorbestimmten Zählzeitintervalls erfolgt;

  d. Regeln von Umlauffrequenz oder Abstimmrate derart, dass die Verhältnisse der Zählwerte zu den Längen der Zählzeitintervalle in einem vorbestimmten Sollwertintervall gehalten werden.

Die Unteransprüche geben vorteilhafte Ausgestaltungen der Erfindung an.

Das erfindungsgemäße Verfahren geht vom bereits laufenden Betrieb eines FDML-Lasers aus, d.h. es soll einsetzen, wenn der Laser einen nach dem Stand der Technik als synchron zu bewertenden Zustand erreicht hat. Es sorgt dann dafür, dass diese Synchronität über die weitere Betriebsdauer erhalten bleibt, und ersetzt andere Regelungen, sofern der Laser nicht z.B. durch Einwirkung von außen plötzlich und erheblich aus seinem geregelten Betriebszustand herausgetrieben wird, etwa durch mechanische Erschütterung oder Schwankung der Netzspannung. Die erforderlichen Schritte zum Hochfahren oder Wiederanfahren eines FDML-Lasers bis zur Synchronität sind dem Fachmann u. a. aus der Literatur geläufig.

Zum Beispiel kann eine einfache Messung der Ausgangsleistung des FDML Lasers in Abhängigkeit verschiedener Abstimmraten dazu benutzt werden, den FDML Laser grob auf eine Abstimmrate einzustellen, die sich in etwa beim Leistungsmaximum befindet. Eine solche Leistungsmaximierung ist in US 7,414,779 B2 und von Murari beschrieben und kann die Anpassung von Umlauffrequenz und Abstimmrate bis auf eine Abweichung von 1 - 10 Hz erlauben. Für eine übliche Umlauffrequenz in der Größenordnung einige Hundert Kilohertz entspricht dies einer Genauigkeit von $10^{-5}$ bis $10^{-6}$. Diese Verfahrensweise kann als "Grobregelung" bezeichnet und zum Starten eines FDML Lasers verwendet werden. Die Erfindung stellt demgegenüber nun eine zusätzliche "Feinregelung" bereit, die von der Grobregelung übernehmen und die Laserqualität weiter verbessern kann.

Eine Kombination von Grobregelung und Feinregelung ist grundsätzlich von Vorteil auch über den Startvorgang des FDML Lasers hinaus. Denn die Grobregelung kann auch als "Abfang- und Rückhol-Prozedur" verwendet werden, wenn dem erfindungsgemäßen Verfahren die Regelung zeitweise nicht gelingt. Dies kann beispielsweise passieren, wenn aus irgendeinem Anlass so viele Zählereignisse auftreten, dass die Messelektronik einen erheblichen Anteil nicht mehr erfassen kann. Man kann dann bei Überschreiten eines vorbestimmten maximalen Zählwertes in einem Zählzeitintervall von der hier vorgestellten Feinregelung auf eine Grobregelung nach bekannten Methoden, z.B. mittels der beschriebenen Leistungsmaximierung, umschalten. Sobald die Grobregelung den Laser in einen nahezu synchronen Zustand zurückgebracht hat, kann die Feinregelung wieder die Kontrolle übernehmen. Alternative Verfahren zum Aufsetzen einer Grobregelung liegen auch noch in einer Minimierung der integrierten Rauschleistung oder in einer direkten Messung der Umlaufzeit des Laserlichts mit einem Pulssignal aus einer Fotodiode.

Der wesentliche Unterschied des erfindungsgemäßen Verfahrens zum herkömmlichen Integrieren des Messsignals eines Fotodetektors liegt darin, dass der tatsächlichen Dauer eines Abschaltens bzw. der zeitlichen Länge eines Intensitätseinbruchs bei der Erfindung keinerlei Beachtung geschenkt wird.

Stattdessen wird lediglich das Auftreten eines Einbruchs registriert und ein Zähler erhöht, wenn das Auftreten innerhalb eines Zählzeitintervalls erfolgt. Der Zählerstand am Ende des Zählzeitintervalls wird dann zur Länge des Zählzeitintervalls ins Verhältnis gesetzt, d.h. es wird eine Häufigkeit der Ausschläge im Messsignal des wenigstens einen Fotodetektors ermittelt. Dieses Verhältnis wird fortlaufend für weitere Zählzeitintervalle neu bestimmt, d.h. der Zähler wird zu Beginn jedes Zählzeitintervalls zu null gesetzt.

Die Zählzeitintervalle können derart vorbestimmt sein, dass Anfang und Ende wenigstens des jeweils nächsten Zählzeitintervalls festgelegt sind, bevor der Zählvorgang in eben diesem nächsten Zählzeitintervall beginnt. Vorzugsweise kann man von vornherein gleich lange Zählzeitintervalle vorsehen, die gleichmäßige Zeitabstände zueinander aufweisen. Es kann aber auch vorteilhaft sein, die Länge der Zählzeitintervalle während der laufenden Regelung zu verändern, beispielsweise für spätere Zählzeitintervalle um einen vorbestimmten Prozentsatz zu verkürzen (verlängern), wenn ein oder mehrere Zählwerte der früheren Zählzeitintervalle oberhalb (unterhalb) von vorbestimmten Schwellenwerten liegen. Überdies kann es vorteilhaft sein, zeitliche Lücken vorbestimmter Dauer zwischen zwei aufeinander folgenden Zählzeitintervallen vorzusehen.

Diese vorbestimmten Zählzeitintervalle können während des Betriebs angepasst werden, zum Beispiel ist ein kurzes Zeitintervall am Anfang in einem Bereich sinnvoll, wo viele Einbrüche auftreten, um den Zähler nicht zu überlasten, also zu viele Zählereignisse zu erzeugen. Wenn dann der Regelung nach einer gewissen Zeit bereits so gut arbeitet, dass nur noch sehr weniger Zählereignisse pro Zählintervall auftreten, kann das Zählfenster verlängert werden. Es kann auch entsprechend in rauschstärkere und rauschärmere optische Frequenzbereiche geschoben werden. Adaptive Ansätze der Regelung können sich auch auf eine veränderliche Lage und Breite der Zählzeitintervalle, der Zählschwellenwerte oder auf einen Amplitudengewichtungsfaktors beziehen. Die Breite der Intervalle kann vergrößert werden wenn die Ereignisse seltener werden, die Lage kann mehr in Richtung auf das Zentrum des Sweeps geschoben werden.

Alternativ kann man die Länge der Zählzeitintervalle auch direkt messen, indem man einen Zähler als Stoppuhr verwendet. Die Zeitmessung beginnt mit dem Nullsetzen des Zählers und endet dann bei Erreichen eines vorbestimmten Zählwertes.

Die erfindungsgemäße Regelung kann völlig asynchron arbeiten, d.h. die Zählzeitintervalle müssen in keiner Weise mit dem Laser synchronisiert werden.

In allen vorgenannten Fällen lassen sich Verhältnisse von Zählwerten zu Zählzeitintervalllängen ermitteln, die für die erfindungsgemäße Regelung geeignet sind. Diese Verhältnisse sollen in aufeinander folgenden Zählzeitintervallen immer wieder neu - repetierend - ermittelt und dabei durch das Regeln von Umlauffrequenz oder Abstimmrate innerhalb eines vorbestimmten Sollwertintervalls gehalten werden. Die Untergrenze des Sollwertintervalls kann man bevorzugt zu null setzen, während die Obergrenze in Abhängigkeit des konkreten Laseraufbaus durch Beobachtung des Laserverhaltens empirisch vom Fachmann festgelegt werden kann.

Insgesamt strebt man eine Minimierung der Zählwerte bzw. der Verhältnisse an, d.h. man wünscht sich beispielsweise, dass die Verhältniswerte möglichst nahe an der Untergrenze des Sollwertintervalls liegen. Doch die Lasereigenschaften driften unvermeidlich und sehr schnell aufgrund der vorgenannten extremen Empfindlichkeiten, und so ist es zweckmäßig, für die Regelung eine Reaktionstoleranz vorzusehen, indem man einen Wertekorridor für die Verhältniswerte gestattet, der keine regeltechnische Änderung von Umlauffrequenz oder Abstimmrate veranlasst. Erst beim Ausbrechen der Verhältniswerte aus diesem Korridor soll die Regelung dann wirksam werden und, beispielsweise durch Ändern der Frequenz eines Frequenzgenerators, der den optischen Filter abstimmt, die Verhältniswerte wieder in den Korridor zurückführen. Auf diese Weise kann vermieden werden, dass die Regelung zeitlich nicht Schritt halten kann und/oder ins Schwingen gerät.

Es kann weiterhin von Vorteil sein, das Sollwertintervall während der laufenden Regelung adaptiv neu vorzubestimmen, d.h. das Sollwertintervall für spätere Zählzeitintervalle hinsichtlich wenigstens einer Sollwertintervallgrenze zu verändern, beispielsweise dann, wenn die Verhältniswerte früherer Zählzeitintervalle insgesamt sehr starken Schwankungen unterliegen und die Reaktionstoleranz der Regelung bis auf weiteres vergrößert werden soll. Das Sollwertintervall ist also vorbestimmt im Sinne der Bewertung jedes ermittelten Verhältniswertes zum Zweck einer Entscheidung über Regelungsmaßnahmen; es ist aber dazu nicht notwendig während der gesamten Betriebsdauer des Lasers auf feste Intervallgrenzen fixiert.

In diesem Zusammenhang ist aber noch anzumerken, dass Experimente mit einem erfindungsgemäß geregelten FDML Laser konkret zur Bildgebung nach Art der optischen Kohärenztomographie (OCT) gezeigt haben, dass ein Nachregeln um wenige Millihertz keinen merklichen Einfluss auf die Bildqualität hat. Das heißt, ein leichter Jitter durch ständiges Nachregeln kann für die OCT durchaus akzeptabel sein. Dies wiederum gestattet dann auch einen reinen Minimums-Regelansatz, bei dem die Regelung nach jedem Zählzeitintervall die Frequenz geringfügig ändert. Immer wenn sich der Zählwert in einem Intervall gegenüber dem vorangegangenen Intervall erhöht, wird die Richtung der Regelung im nachfolgenden Intervall umgekehrt, so dass auf einen Zählwert null hin geregelt wird. Die Dauer der Zählzeitintervalle wird dabei vorzugsweise adaptiv angepasst, bevorzugt je weniger Zählereignisse auftreten desto größer.

Die Ausschläge im Messsignal des Fotodetektors können z.T. direkt vom Zeittakt des umlaufenden Laserlichts im Resonator bzw. vom Zeittakt des Filters herrühren. Der Frequenzbereich der Umlauffrequenz und ihrer höheren Harmonischen liegt jedoch weit unterhalb der Frequenzen, die für die hier interessierenden Subnanosekunden-Einbrüche des Lasers bedeutsam sein können. Vorzugsweise sollen daher im Messsignal Frequenzanteile zu den ersten N Vielfachen der Umlauffrequenz unterdrückt werden, wobei N eine vorbestimmte natürliche Zahl ist. Besonders bevorzugt wird das Messsignal Hochpass-gefiltert wird mit einer Grenzfrequenz bis zu 100 MHz. Für eine beispielhafte Umlauffrequenz von 411 kHz kann also $1 \leq N \leq 243$ gewählt werden, wobei wenigstens $N \geq 100$ zu bevorzugen ist.

Es wird weiterhin als eine besonders vorteilhafte Ausgestaltung der Erfindung angesehen, den Zähler während eines Zählzeitintervalls nur dann zu erhöhen, wenn ein außergewöhnlich großer Ausschlag im Messsignal auftritt. Ausgehend von einem zunächst synchron laufenden Laser, bei dem Ausschläge im Messsignal weitestgehend rauschbedingt sind, kann man beispielsweise die Amplituden $A(k)$ der Ausschläge zunächst als eine gaußverteilte Zufallsgröße betrachten und über einen kurzen Zeitraum - eine endliche Stichprobe - eine herkömmliche Standardabweichung, z.B.

$$\sigma = \sqrt{\frac{1}{n} \sum_{k=0}^{n} (A(k) - \langle A \rangle)^2}$$

mit $\langle A \rangle$ als Mittelwert des Messsignals berechnen. Hiernach kann ein Schwellenwert - "Bias ", B - gesetzt werden, beispielsweise $B = 3 * \sigma$. Sobald dann - u. a. infolge einer Verschlechterung der Synchronität - Ausschläge mit der Bedingung $|A(k) - \langle A \rangle| > B$ auftreten, können diese als außergewöhnlich groß und damit regelungsrelevant gewertet werden, während die übrigen als durch stochastisches Rauschen bedingt vernachlässigt werden. Es werden vorzugsweise nur solche Ausschläge im Messsignal gezählt, deren Differenzbetrag zum Mittelwert des Messsignals einen vorbestimmten Schwellenwert übersteigt. Diese Vorgehensweise erhöht im Übrigen noch den Unterschied zur herkömmlichen Regelung des Lasers basierend auf einem Messsignalintegral, da hier eine nicht-lineare Gewichtung der Messsignalanteile vorgenommen wird. Anders ausgedrückt, wird nämlich in diesem Fall auch der Höhe der Ausschläge im Messsignal, mithin dem Ausmaß der gemessenen Intensitätseinbrüche, recht wenig Beachtung geschenkt. Es findet nur noch eine Klassifizierung in relevant und nicht relevant statt.

In einer alternativen Ausgestaltung erfolgt die Festlegung eines Schwellenwertes zum Zählen durch einen einfachen Vergleich mit den größten im Messsignal auftretenden Amplituden. Beispielsweise können Schwellenwerte gesetzt werden bei 5%, 10%, 30%, 50% oder 75% des Maximalausschlages.

Durch das Einführen eines Schwellenwerts ist das Verfahren extrem robust gegen äußere Störungen, Dunkelstrom und elektronisches Rauschen.

Die vorstehend beschriebene Regelung arbeitet aber vor allem hoch präzise, etwa 100 - 1000mal genauer, als bisher vorgestellte Regelungen, die zum Beispiel nur auf Leistung regelten. Die Genauigkeit liegt unter guten Umständen unter einem Millihertz, was bei einer Abstimmrate von 400 kHz einer relativen Ganggenauigkeit von nahezu $10^{-9}$ entspricht.

Die Erfindung wird im Folgenden näher erläutert auch anhand von Figuren. Dabei zeigt:

Fig. 1    einen Plot der Laseremission (Spannungssignal) für einen nahezu synchronen FDML-Laser mit einer Regelung nach dem Stand der Technik gemessen mit einem hochauflösenden Oszilloskop (50 GHz);

Fig. 2    einen Plot der Laseremission wie in Fig. 1 für einen mit der Erfindung geregelten FDML-Laser;

Fig. 3    einen Plot der gezählten Einbrüche des Messsignals bei Variation der Abstimmrate um $\pm$ 5 Hz in der Umgebung der Umlauffrequenz

Fig. 4    einen Plot der direkt mit einem hochauflösenden Oszilloskop (50 GHz) gezählten Anzahl der Intensitätseinbrüche bei Variation der Abstimmrate um $\pm$ 100 mHz in der Umgebung der Umlauffrequenz;

Fig. 5    einen Plot der Abstimmrate des Lasers bei aktiver Regelung eines Resonators mit temperaturstabilisierter Cavity;

Fig. 6    eine schematische Skizze des Wellenzahlverlaufs der Filterselektivität zur Erläuterung der Messung der Restdispersion;

Fig. 7    einen Plot mit Vergleichsdaten zwischen einem interferometrisch erzeugten Proxysignal (unten) mit dem zugehörigen Messsignal der Laseremission ohne Regelung;

Fig. 8    einen Plot wie Fig. 5 bei aktivierter Regelung basierend auf dem Proxysignal.

Ein beispielhafter experimenteller Aufbau eines FDML-Lasers weist eine Resonatorlänge von etwa 500 m, eine Umlauffrequenz von 411 kHz, eine Abstimmbandbreite von etwa 130 nm und eine Abstimmrate von 411 kHz auf. Die Durchlasswellenlänge $\lambda(t)$ folgt dabei dem Zeitverlauf einer Sinusfunktion um die Zentralwellenlänge $\lambda_0$ = 1295 nm, doch wird für das Laserlicht nur ein möglichst linear verlaufender, ansteigender Abschnitt der Sinusfunktion genutzt, der einem Achtel des Funktionsverlaufs entspricht. Entsprechend wird das laseraktive Medium nur für ein Achtel jeder Umlaufperiode optisch gepumpt. Die Dauer eines Sweeps beträgt somit 1/3,288 MHz = 304 Nanosekunden.

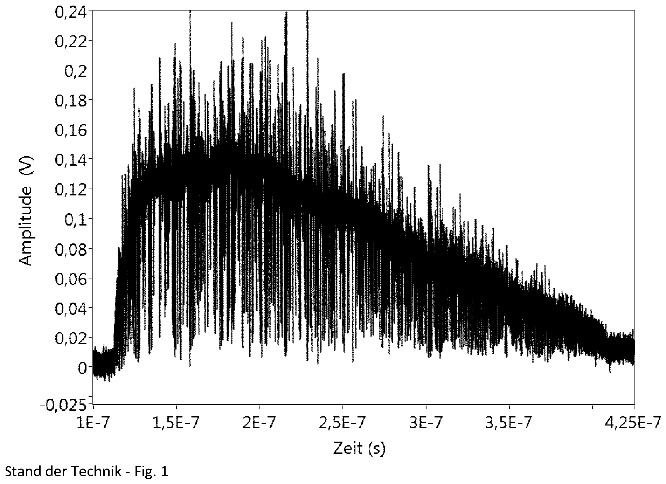

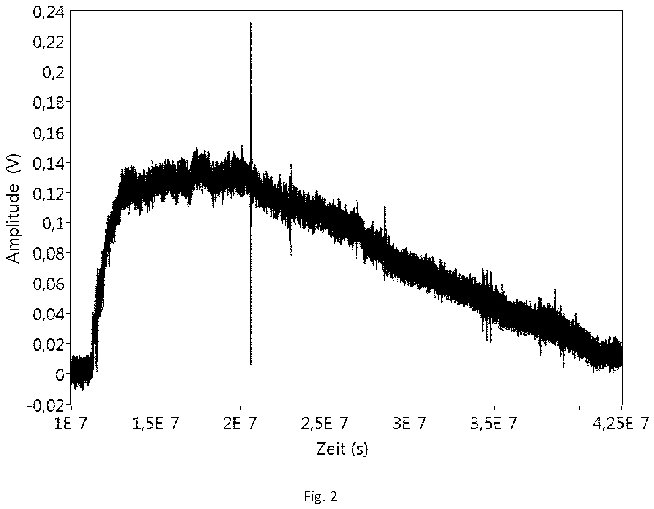

In Fig. 1 ist die mit einem hochauflösenden Oszilloskop (Detektionsbandbreite 50 GHz) gemessene Intensitätsverteilung eines ausgekoppelten Laserlichtanteils über die Dauer eines Sweeps dargestellt. Die Zeitachse entspricht somit zugleich einer Wellenlängenachse, und die mittlere Intensität variiert mit der Wellenlänge. Die Messkurve in Fig. 1 zeigt die Intensität eines FDML-Lasers, der synchron nach dem Stand der Technik läuft. Die zahlreichen, sehr kurzzeitigen Ausschläge im Messsignal sind bei dieser Auflösung sehr gut zu erkennen, lassen sich aber mit einer handelsüblichen Messelektronik (Detektionsbandbreite < 2 GHz), die für gängige Regelungen zur Verfügung steht, nicht erfassen. Nutzt man diese Ausschläge in positiver oder negativer Richtung, nach dem erfindungsgemäßen Verfahren zur Regelung, dann kann man eine deutlich verbesserte Intensitätsverteilung erreichen, wie in Fig. 2 zu sehen ist.

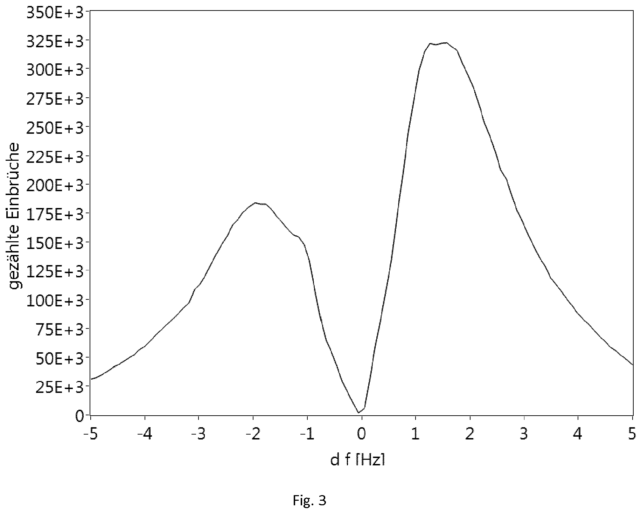

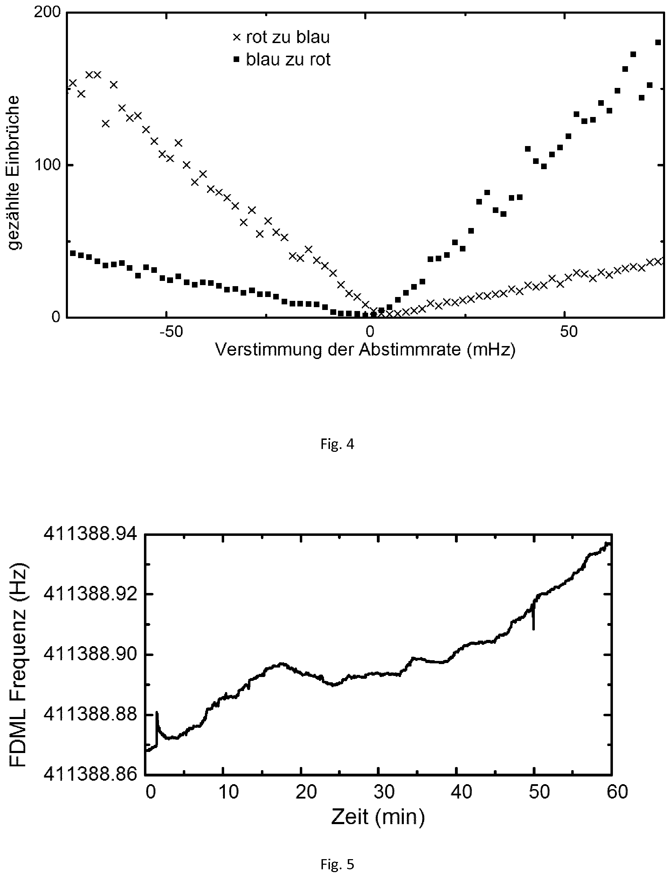

Die Präzision der erfindungsgemäßen Regelung wird besonders deutlich, wenn man sich die Zählwerte der Ausschläge - in diesem Fall gemessen in regelmäßig beabstandeten, gleich großen Zählzeitintervallen - unter kontrollierter Variation der Abstimmrate näher ansieht. Der Plot in Fig. 3 zeigt die Zählwerte in der Umgebung von ± 5 Hz um die optimale Abstimmrate, die zur Synchronität des Lasers führt. Man findet ein globales Minimum der Ausschläge bei Synchronität, wobei die Flanken der Messkurve nahe dem Minimum bereits bei Variationen der Größenordnung 100 mHz starke Anstiege zeigen. Dies ermöglicht das Aufsetzen einer Regelung, die bereits ein Auseinanderlaufen der Frequenzen um einige Millihertz detektieren und kompensieren kann. In Fig. 4 ist zur Verdeutlichung die direkt mit einem hochauflösenden Oszilloskop (50 GHz) gemessene mittlere Anzahl der Intensitätseinbrüche in einem Lasersweep bei Variation der Abstimmrate um lediglich ±100 mHz zu sehen. Dabei sind die Messdaten danach unterschieden, ob die Wellenlänge während des Sweeps verkürzt (red-to-blue) oder verlängert (blue-to-red) wird.

Mit Hilfe der erfindungsgemäßen Regelung wird erstmals ein dauerhafter, stabiler Betrieb eines FDML-Lasers mit bisher unerreicht niedrigem Rauschen bei zugleich besten Kohärenzeigenschaften realisiert. Die Regelung arbeitet sehr genau und zeigt sich unempfindlich gegenüber externen Einflüssen, z.B. Strahlung, und gegenüber Variationen des im Resonator umlaufenden Laserlichtspektrums.

Fig. 5 zeigt den Verlauf der Abstimmrate eines geregelten und temperaturstabilisierten FDML-Lasers während einer Zeitspanne von 60 Minuten. Die erkennbare langfristige Drift um ca. 80 mHz ist auf eine auch mit der Temperaturstabilisierung nicht vermeidbare Änderung der Umlauffrequenz des Lasers zurückzuführen. Die Feinregelung kann diese Drift problemlos mitmachen und wird auch durch das zeitweise Einschalten einer Vakuumpumpe (nahe 0 und um 50 min) nicht gestört, d.h. die Feinregelung ist robust.

Es ist hier zu betonen, dass das zuvor erwähnte schnell detektierende Oszilloskop hier nicht allein zur Regelung, sondern eben auch zur Darstellung der ungeregelten und geregelten Laseremission in den Fig. 1 und 2 herangezogen wird. Für die Regelung allein benötigt man aber ein solches Messgerät nicht. Es existieren auch sehr einfache und kostengünstige, in Hardware implementierte Zählwerke (üblich Mikroprozessoren), die auf sehr kurze Trigger-Zeiten ausgelegt sind. Beispielsweise kommen solche Zählwerke bei Photonen-zählenden Detektoren zum Einsatz. Zur Ausführung der Erfindung werden nur deren Zählwerte und die Längen der Zählzeitintervalle benötigt. Letztere können fest - und an sich beliebig nach Wahl des Nutzers - vorbestimmt werden, z.B. zu 0,1 Sekunden oder dergleichen. Die Verwendung eines in Hardware implementierten Zählwerks ist generell eine bevorzugte Ausgestaltung der Erfindung.

Es kann weiterhin vorteilhaft sein, wenn die Zählzeitintervalle kürzer als die inverse Umlauffrequenz sind. Insbesondere ist es dann möglich und vorteilhaft, dass die Zählzeitintervalle zu vorbestimmten Zeiten nach Beginn eines Wellenlängen-Sweeps beginnen und enden.

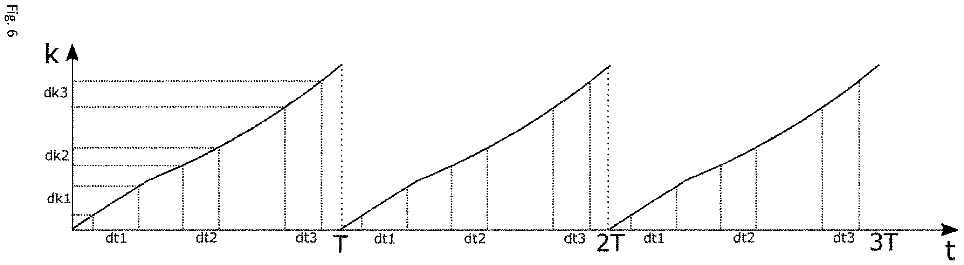

In Fig. 6 ist schematisch der Wellenlängenverlauf des FDML-Laseroutputs - hier repräsentiert durch die Wellenzahl $k$ = $2\pi/\lambda$ - dargestellt, wobei lediglich zur Verdeutlichung etwaige zeitliche Lücken zwischen den Sweeps entfernt worden sind. Die Periodenlänge T entspricht somit der Dauer eines Sweeps. Der Wellenlängenverlauf ist wie dargestellt praktisch nie strikt linear. Weiterhin sind Fig. 6 drei Zählzeitintervalle dt1, dt2 und dt3 eingetragen, die sich jeweils periodisch mit der Periodendauer T wiederholen. Den Zählzeitintervallen sind jeweils Wellenzahlintervalle dk1, dk2 und dk3 zugeordnet.

Die erfindungsgemäße Regelung kann gezielt auf eine der Serien von Zählzeitintervallen abgestellt werden, beispielsweise auf dt1, indem der Zähler in jedem Sweep zu Beginn von dt1 auf null gesetzt und am Ende von dt1 abgelesen wird. Das Zählzeitintervall dt1 ist hier auf den Beginn eines Wellenlängen-Sweeps referenziert, da nur so die feste Bezugnahme auf das Wellzahlintervall dk1 über alle Sweeps erhalten bleibt. Insofern beginnen und enden die Zählzeitintervalle zu vorbestimmten Zeiten nach Beginn eines Sweeps.

Die Regelung optimiert dann automatisch die Synchronität des Lasers allein für das Wellenzahlintervall dk1. Man kann somit sehr präzise die mittlere Umlauffrequenz für die Wellenlängen des Intervalls dk1 messen. Diese Messung ist genauso für die übrigen Intervalle dt2 bzw. dk2 und dt3 bzw. dk3 möglich. Somit kennt man schließlich die mittleren Umlaufzeiten für unterschiedliche Wellenlängenbereiche und kann die Restdispersion im Laser messen und bei Bedarf optimieren. Zudem kann man entweder Zählzeitintervalle, welche sich für die Frequenzregelung besonders eignen, auswählen oder auch alternativ Zählzeitintervalle, die sich weniger gut eignen, aus der Verwendung zur Regelung ausschließen.

Es kann vorteilhaft sein, statt des regulär im Resonator umlaufenden Lichts das am Filter reflektierte Licht auszukoppeln und zu analysieren, wobei sich die Intensitätseinbrüche im transmittierten Licht als Intensitätsspitzen im reflektierten Licht widerspiegeln und das Messsignal weniger Untergrund durch die mittlere reflektierte Intensität aufweist.

Wie bereits erwähnt sind die Intensitätseinbrüche der Laseremission bzw. die Ausschläge im Messsignal des wenigstens einen Fotodetektors bisher nicht mit einem kommerziell vertretbaren Aufwand detektierbar, weil die dafür benötigte Detektionsbandbreite zu hoch und entsprechend leistungsfähige Messelektronik in der Regel zu teuer ist, um sie nur für die Betriebsregelung eines Lasers zu nutzen. Die praktische "Unsichtbarkeit" dieser Einbrüche bzw. kurzzeitigen Abschaltungen ermöglicht allerdings auch gerade die hochqualitative OCT mit herkömmlichen FDML-Lasern.

Es folgen deshalb zwei Vorschläge, wie man die Ausschläge des Messsignals zumindest für eine Regelungselektronik leichter erfassbar macht, um auch die Verwendung einer kostengünstigen Technik zu ermöglichen.

Eine Möglichkeit, die Intensitätseinbrüche auch mit Detektionshardware mit geringerer Detektionsbandbreite sichtbar zu machen, besteht darin die Intensitätseinbrüche selbst länger bzw. langsamer zu machen, so dass die direkten Messsignale niedrigere Frequenzkomponenten besitzen. Wie theoretische Betrachtungen zeigen, sind die Dauer der Einbrüche sowie ihre Flankensteilheit direkt mit der Finesse des optischen Filters verknüpft; eine höhere Finesse bedingt steilere Flanken und verlängert die Dauer der Einbrüche. Somit würde eine höhere Finesse die benötigte Detektionsbandbreite der Regelung verringern.

Als veränderbar wellenlängenselektiver, optischer Filter wird in einem FDML Laser üblich ein durchstimmbarer Fabry-Perot-Filter verwendet. Dieser ist ein optischer Resonator, der zwei Spiegel mit hoher Reflektivität, z.B. 99,5%, aufweist, deren Abstand zueinander verstellt werden kann. Eine Variation des Spiegelabstands ergibt dabei eine Änderung der transmittierten Wellenlängen. Alle Wellenlängen, die ein ganzzahliger Teiler des Spiegelabstandes sind, werden transmittiert. Als die Finesse eines Fabry-Perot-Filters bezeichnet man das Verhältnis von Wellenlängenabstand zu Wellenlängenbandbreite für die transmittierten Wellenlängen bei festem Spiegelabstand. Je größer die Reflektivität der Spiegel ist, desto schmaler sind die transmittierten Wellenlängenbereiche und desto größer ist die Finesse des Filters.

Die Dauer der Einbrüche wiederum liegt in etwa im charakteristischen Zeitbereich der inversen Wellenlängenbandbreite - und ist damit proportional zur Finesse. Als ein Beispiel zur Abschätzung der charakteristischen Zeiten, die hierbei involviert sind, dient ein Filter mit einer Wellenlängenbandbreite von 0,1 nm entsprechend einer optischen Frequenzbandbreite von 17 GHz. Ausgehend von dem generellen Zusammenhang, dass die Anschwing- und Abklingzeiten eines Bandpassfilters der Hälfte der inversen Filterbandbreite entsprechen, kann man hierbei Einbrüche auf einer Zeitskala von $1/(2*17GHz) = 30$ ps erwarten. Wird nun vorzugsweise ein optischer Bandpassfilter mit weniger als 0,01 nm gewählt, so erhöht sich die Einbruchdauer auf mehr als 300 ps und ist mit geringerer Bandbreite detektierbar.

Somit ist die gezielte Wahl einer ausreichend kleinen Wellenlängenbandbreite des optischen Filters eine Maßnahme, um die Zeitdauer der Einbrüche so weit zu vergrößern, dass die Detektion mit einer wirtschaftlich vorteilhaften Detektionsbandbreite zu realisieren ist. Bei einer Wellenlängenbandbreite von beispielsweise nur 0,005 nm können Zähleinheiten mit einer Eingangsanalogbandbreite von nur noch 1,7 GHz verwendet werden. Da aber auch Einbrüche detektiert werden können, die kürzer als inverse Analogbandbreite sind - dann aber mit reduzierter Amplitude -, können zum Beispiel durch Absenken der Zählschwellenwerten auch noch Messungen durchgeführt werden. Es bieten sich daher für eine analoge Detektionsbandbreiten von 6 GHz, 3 GHz, 2 GHz, oder 1 GHz optische Filterbreiten von 0,2 nm, 0,1 nm, 0,05 nm oder 0,02 nm an.

Diese zeitliche Verlängerung der Einbrüche beeinflusst allerdings die Qualität der FDML-Laseremission erheblich, da nun ein unübersehbares "Flackern" des Lasers stattfindet. Zumindest für manche Anwendungen ist dies nicht wünschenswert.

Eine weitere Möglichkeit, die erfindungsgemäße Regelung mit preiswerter Messtechnik durchzuführen besteht darin, anstelle der Laserintensität einen optischen Proxy zu detektieren, der dieselbe Ursache wie die schnellen Intensitätseinbrüche besitzt, aber auf diese Ursache auf einer anderen Zeitskala reagiert. Ein dazu geeigneter Proxy ist dadurch zu gewinnen, dass man einen aus dem Resonator ausgekoppelten Anteil des umlaufenden Laserlichts mit sich selbst zu einem späteren Zeitpunkt überlagert.

Es wird derzeit angenommen, dass immer wieder auftretende Fehler in der Phasenanpassung des im Resonator umlaufenden Laserlichts, u.a. bei der Ankunft am optischen Filter, die sehr kurzzeitigen Abschaltungen hervorrufen. Wenn dem so ist, müssen diese Phasenfehler auch im Interferenzlicht vorliegen und u. a. auch jene Lichtfeldanteile betreffen, die nach der Superposition zweier zueinander zeitverzögerter - und damit auch wellenlängenverschobener - Laserlichtanteile die Differenzfrequenz der überlagerten Lichtfelder aufweisen. In diesen Schwebungen des Interferenzlichts kann man deshalb Hinweise auf die Phasenfehler erwarten, die auf einer längeren Zeitskala auftreten als die Intensitätseinbrüche selbst. Wie sich experimentell herausgestellt hat, ist dies auch der Fall.

Es hat sich als besonders vorteilhaft erwiesen, das bislang beschriebene Regelungsverfahren dahingehend zu modifizieren, dass das aus dem Resonator ausgekoppelte Laserlicht einem Interferometer mit wenigstens zwei verschiedenen Armlängen zugeführt wird, wobei der wenigstens eine Fotodetektor wenigstens das Interferenzlicht an wenigstens einem Ausgang des Interferometers erfasst.

Zur Erzeugung einer solchen Interferenz kann im einfachsten Fall das ausgekoppelte Laserlicht durch eine planparallele Platte gestrahlt werden. Dabei interferieren Reflexe von Vorder- und Rückseite der Platte, und die Teilstrahlen weisen dadurch einen Weglängenunterschied auf. Die Platte kann aus Glas, einem Halbleiter wie Silizium, Zinkselenid, Germanium oder einem anderen üblichen Material mit möglichst hohem Brechungsindex für starke Interferenz gebildet sein. Ebenso kann die Lichtführung durch das Interferometer fasergebunden mit zwei 50/50-Faserkopplern und zwei verschieden langen Fasern zwischen den Kopplern erfolgen. Der erste Faserkoppler dient dabei als Strahlteiler, der das aufgeteilte Licht über die beiden verschieden langen Fasern dem Eingang des zweiten Faserkopplers zuführt, in dem die Teilstrahlen interferieren. Überdies oder alternativ können die beiden Teilstrahlen zur Erzeugung der Interferenz auch an zwei verschiedenen Stellen des Resonators entnommen werden. Einer oder beide Teilstrahlen können dabei auch dem vom Filter reflektierten Licht entnommen werden.

An den Ausgängen des Interferometers wird das Interferenzlicht bevorzugt heterodyn mittels eines Paares balancierter Fotodetektoren als elektrisches Differenzsignal erfasst.

Bevorzugt beträgt der Armlängenunterschied dabei zwischen 3 und 150 Millimeter. Vor allem ist dabei wichtig, dass die korrespondierende Schwebungsfrequenz größer als die Detektionsbandbreite der nachgeschalteten Elektronik ist. Das mit einer Detektionsbandbreite kleiner als 6 GHz, bevorzugt kleiner al 4 GHz, besonders bevorzugt kleiner als 2 GHz, ganz besonders bevorzugt kleiner als 1 GHz erfasste Messsignal des balancierten Fotodetektors sollte dann, abgesehen von verbleibenden Variationen im Kopplungsverhältnis der Strahlaufteilung insbesondere in Abhängigkeit der Wellenlänge, nach fachmännischer Erwartung für einen FDML-Laser eine glatte Nulllinie zeigen. Tatsächlich werden aber kurzzeitige Ausschläge erfasst, die man als längere Phasen eines gestörten Interferenzsignals an den Detektoren interpretieren kann. Die Ausschläge treten sporadisch mit positiven und negativen Vorzeichen und unterschiedlich großen Amplituden auf.

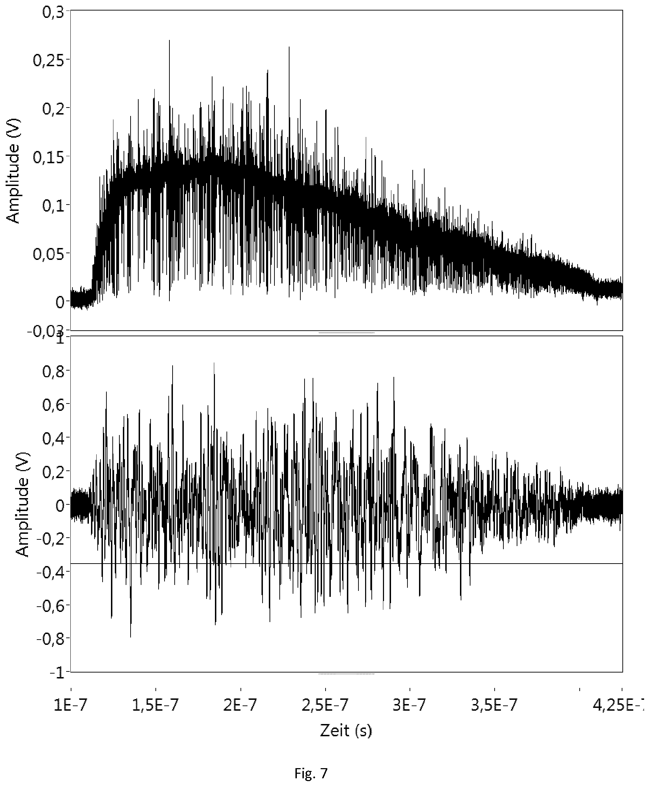

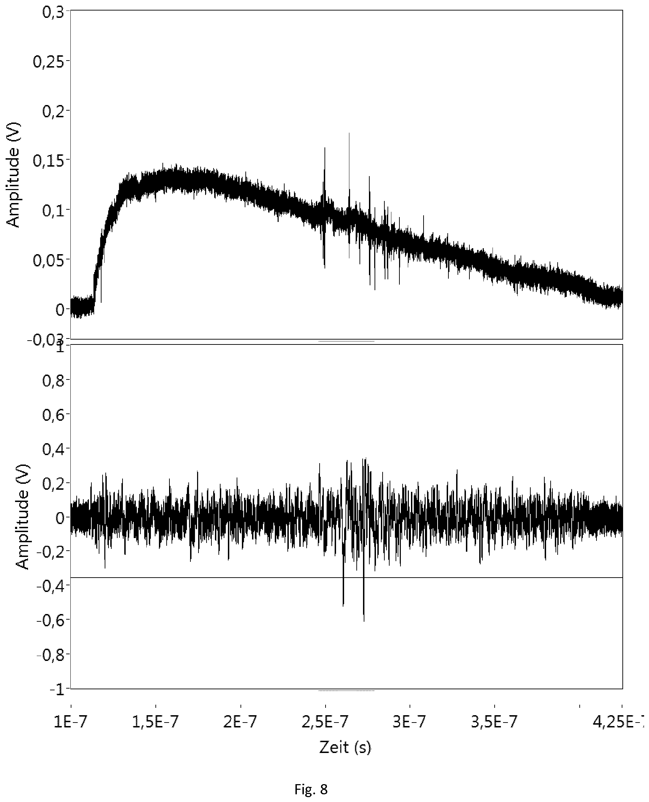

Das Bemerkenswerte am Messsignal des Interferenzlichts ist, dass seine Ausschläge mit den sehr viel kürzeren Intensitätseinbrüchen der Laseremission hervorragend korreliert sind. Die Fig. 7 und 8 zeigen Messkurven des Interferenzlichtsignals (jeweils unten) im direkten Zeitvergleich zu den Intensitätsverläufen des Lasers während eines Sweeps (jeweils oben). Die Ausschläge im Interferenzlicht nehmen erheblich ab, wenn der Laser optimal synchronisiert ist. Man kann deshalb ohne weiteres auch nach den Zählwerten der Ausschläge in dem Messsignal des Interferenzlichts, das nur ein Proxy ist, die erfindungsgemäße Laserregelung durchführen. Dies ist im Labor der Erfinder mit einer handelsüblichen und preiswerten Messkarte mit 400 MHz Bandbreite genauso realisiert worden.

Die FDML-Laseremission wird bei der Regelung nach dem Proxy in keiner Weise verschlechtert, es findet vor allem kein "Flackern" statt. Die Kohärenz der Strahlung wird durch die Regelung vielmehr für alle Wellenlängen verbessert.

Die beiden vorbeschriebenen Modifikationen des erfindungsgemäßen Regelungsverfahrens zielen darauf ab, dass das Erfassen des Messsignals mit einer Detektionsbandbreite von wenigen Gigahertz, ganz besonders bevorzugt mit weniger als 1 GHz, erfolgt. Dies ist auch mit preiswerter Messtechnik zu erreichen.

Es kann anstelle der Regelung der Abstimmrate auch alternativ die Umlauffrequenz verändert werden. Es ist insbesondere möglich, basierend auf der Feinregelung die Resonatorlänge durch eine kurze Freistrahlstrecke, durch eine Faserheizung, oder durch einen üblicherweise piezobasierten Faserstrecker zu variieren.

Maßnahmen zur Temperaturstabilisierung des Laserresonators, vor allem in Bezug auf die Temperatur der Faserspule, können von Vorteil für die Regelung sein. Dazu kann die Glasfaserspule auf einem gut wärmeleitenden Träger montiert sein, z.B. Aluminium anstelle von eigentlich für Glasfasern üblichen Kunststoffen, und dieser Träger kann dann über Peltierelemente temperaturstabilisiert sein. Es kann vorteilhaft sein, dass ein Großteil des Resonators thermisch isoliert ist, z.B. durch geschäumte Kunststoffe.

## Patentansprüche

1. Verfahren zur Erhaltung der Synchronität eines Fourier Domain Mode Locked, FDML, Lasers, wobei der FDML Laser wenigstens einen dispersionskompensierten Resonator mit wenigstens einem veränderbar wellenlängenselektiven optischen Filter aufweist, wobei das Laserlicht im Resonator mit einer Umlauffrequenz umläuft und der Filter wiederholt mit einer Abstimmrate in seiner Wellenlängenselektivität verändert wird, wobei der FDML Laser synchron ist, wenn die Abstimmrate ein ganzzahliges Vielfaches der Umlauffrequenz beträgt, **gekennzeichnet durch** die Schritte

a. Auskoppeln wenigstens eines Anteils des Laserlichts aus dem Resonator;

b. Erfassen wenigstens eines Anteils des ausgekoppelten Laserlichts mit wenigstens einem Fotodetektor;

c. das Verfahren weiterhin **gekennzeichnet durch** die Schritte Zählen von Ausschlägen im Messsignal des Fotodetektors während aufeinander folgender Zählzeitintervalle, wobei bei Auftreten eines Intensitätseinbruchs der Zähler erhöht wird, wenn das Auftreten innerhalb eines vorbestimmten Zählzeitintervalls erfolgt;

d. Regeln von Umlauffrequenz oder Abstimmrate derart, dass die Verhältnisse der Zählwerte zu den Längen der Zählzeitintervalle in einem vorbestimmten Sollwertintervall gehalten werden.

2. Verfahren nach Anspruch 1, **dadurch gekennzeichnet, dass** im Messsignal Frequenzanteile zu den ersten N Vielfachen der Umlauffrequenz unterdrückt werden, wobei N eine vorbestimmte natürliche Zahl ist.

3. Verfahren nach Anspruch 2, **dadurch gekennzeichnet, dass** das Messsignal Hochpass-gefiltert wird mit einer Grenzfrequenz bis zu 100 MHz.

4. Verfahren nach einem der vorangehenden Ansprüche, **dadurch gekennzeichnet, dass** nur solche Ausschläge im Messsignal gezählt werden, deren Differenzbetrag zum Mittelwert des Messsignals einen vorbestimmten Schwellenwert übersteigt.

5. Verfahren nach einem der vorangehenden Ansprüche, **dadurch gekennzeichnet, dass** die Zählzeitintervalle kürzer als die inverse Umlauffrequenz sind.

6. Verfahren nach Anspruch 5, **dadurch gekennzeichnet, dass** die Zählzeitintervalle zu vorbestimmten Zeiten nach Beginn eines Wellenlängen-Sweeps beginnen und enden.

7. Verfahren nach einem der vorangehenden Ansprüche, **dadurch gekennzeichnet, dass** ein veränderbar wellenlängensensitiver optischer Filter mit einer Wellenlängenbandbreite vorzugsweise kleiner als 0,2, weiter vorzugsweise kleiner als 0,1, weiter vorzugsweise kleiner als 0,05, weiter vorzugsweise kleiner als 0,02 Nanometer verwendet wird.

8. Verfahren nach einem der Ansprüche 1 bis 6, **dadurch gekennzeichnet, dass** das ausgekoppelte Laserlicht einem Interferometer mit wenigstens zwei verschiedenen Armlängen zugeführt wird, wobei der wenigstens eine Fotodetektor wenigstens das Interferenzlicht an wenigstens einem Ausgang des Interferometers erfasst.

9. Verfahren nach Anspruch 8, **dadurch gekennzeichnet, dass** das Interferometer zwei Armlängen mit einem Armlängenunterschied zwischen 3 und 150 Millimeter aufweist.

10. Verfahren nach einem der Ansprüche 7 bis 9, **dadurch gekennzeichnet, dass** das Erfassen des Messsignals mit einer Detektionsbandbreite kleiner als 6 GHz, vorzugsweise kleiner als 4 GHz, besonders bevorzugt kleiner als 2 GHz, ganz besonders bevorzugt kleiner als 1 GHz erfolgt.

11. Verfahren nach einem der vorangehenden Ansprüche, **dadurch gekennzeichnet, dass** bei Überschreiten eines vorbestimmten maximalen Zählwertes in einem Zählzeitintervall auf eine Grobregelung umgeschaltet wird bis der maximale Zählwert wieder unterschritten wird.

12. Verfahren nach einem der vorangehenden Ansprüche, **gekennzeichnet durch** adaptive Anpassung mindestens eines der folgenden Regelparameter: Dauer und Lage der Zählzeitintervalle, Regelschrittweiten, Zählschwellenwerte, Zähltotzeiten.

13. Verfahren nach einem der vorangegangenen Ansprüche, **gekennzeichnet durch** aktive und/oder passive Maßnahmen zur Temperaturstabilisierung des Resonators.

14. Verfahren nach einem der vorangegangenen Ansprüche, **dadurch gekennzeichnet, dass** das am Filter reflektierte Licht für die Regelung verwendet wird.

15. Verfahren nach einem der vorangegangenen Ansprüche, **dadurch gekennzeichnet, dass** Licht an unterschiedlichen Stellen des Resonators entnommen und zur Interferenz gebracht wird.

**Claims**

1. Method for preserving the synchronism of a Fourier Domain Mode Locked FDML laser,

• wherein the FDML laser comprises at least one dispersion-compensated resonator having at least one variable wavelength-selective optical filter,

• wherein the laser light circulates in the resonator with a round-trip frequency and the optical filter is repeatedly altered in its wavelength selectivity with a tuning rate,

• wherein the FDML laser is synchronized when the tuning rate is an integer multiple of the round-trip frequency, **characterized by** the steps of:

a. outcoupling of at least a portion of the laser light from the resonator;

b. detecting at least a portion of the outcoupled laser light with at least one photodetector;

c. the method further **characterized by** the step of counting deflections in the measurement signal of the at least one photodetector during consecutive counting time intervals; wherein on occurrence of an intensity drop the counter is incremented if the occurrence is within a predetermined counting time interval;

d. controlling the round-trip frequency or the tuning rate such that ratios of counter values to lengths of the counting time intervals are maintained in a predetermined setpoint interval.

2. Method according to claim 1, **characterized in that** frequency components of the measurement signal are suppressed to the first N multiples of the round-trip frequency, where N is a predetermined natural number.

3. Method according to claim 2, **characterized in that** the measurement signal is highpassfiltered with a cut-off frequency of up to 100 MHz.

4. Method according to one of the preceding claims, **characterized in that** only those deflections in the measurement signal are counted whose difference from the mean value of the measurement signal is greater than a predetermined threshold value.

5. Method according to one of the preceding claims, **characterized in that** the counting time intervals are shorter than the inverse round-trip frequency.

6. Method according to claim 5, **characterized in that** the counting time intervals start and end at predetermined times after the start of a wavelength sweep.

7. Method according to one of the preceding claims, **characterized in that** a variable wavelength tunable optical filter having a wavelength bandwidth preferably less than 0.2, further preferably less than 0.1, and even further preferably less than 0.05, and further preferably less then 0.02 nm is used.

8. Method according to one of the preceding claims 1 to 6, **characterized in that** the outcoupled laser light is provided to an interferometer with at least two different arm lengths, wherein the at least one photodetector detects at least interference light at least at one output of the interferometer.

9. Method according to claim 8, **characterized in that** the interferometer comprises two arms having a arm length difference between 3 and 150 millimeters.

10. The method according to one of claims 7 to 9, **characterized in that** the detection of the measurement signal occurs with a detection bandwidth less than 6 GHz, preferably less then 4 GHz, in particular preferably less then 2 GHz, and especially preferred less then 1 GHz.

11. Method according to one of the preceding claims, **characterized in that** upon passing a predetermined maximum count value in a counting time interval the method switches to a rough control until again falling below the maximum count value.

12. Method according to one of the preceding claims, **characterized by** adaptive adjustment of at least one of the following control parameters: duration and position of the counting time intervals, widths of the control steps, counting threshold values, or counting dead times.

13. Method according to one of the preceding claims, **characterized by** active or passive measures for temperature stabilization of the resonator.

14. Method according to one of the preceding claims, **characterized in that** the laser light reflected at the filter is used for the controlling.

15. Method according to one of the preceding claims, **characterized in that** light is extracted at different places of the resonator and brought into interference.

**Revendications**

1. Procédé d'obtention de synchronisation d'un laser à **V**errouillage de **M**ode de **D**omaine de Fourier,

sachant que le laser VMDF comporte au moins un résonateur compensé en dispersion avec au moins un filtre optique sélectif en longueurs d'ondes de façon modifiable, sachant que la lumière de laser circule dans le résonateur avec une fréquence de rotation et le filtre est modifié de façon répétée dans sa sélectivité de longueur d'ondes avec un taux de syntonisation, sachant que le laser VMDF est synchrone, lorsque le taux de syntonisation est un multiple entier de la fréquence de rotation, **caractérisé par** les étapes suivantes

a. découplage d'au moins une partie de la lumière de laser du résonateur,

b. saisie d'au moins une partie de la lumière de laser découplée avec au moins un photodétecteur,

c. le procédé **caractérisé en plus par** les étapes de comptage des amplitudes dans le signal de mesure du photodétecteur pendant des intervalles de temps de comptage successifs, sachant qu'en cas d'apparition d'une creux d'intensité, le compteur est augmenté, lorsque l'apparition a lieu à l'intérieur d'un intervalle de temps de comptage prédéterminé,

d. régulation des fréquences de rotation ou des taux de syntonisation de telle manière que les rapports entre les valeurs de comptage et les longueurs des intervalles de temps de comptage soient maintenus dans un intervalle de valeur théorique prédéterminé.

2. Procédé selon la revendication 1, **caractérisé en ce que** des parts de fréquence par rapport aux premiers multiples N de la fréquence de rotation sont supprimées dans le signal de mesure, sachant que N est un nombre naturel prédéfini.

3. Procédé selon la revendication 2, **caractérisé en ce que** le signal de mesure est filtré en passe-haut avec une fréquence limite allant jusqu'à 100 MHz.

4. Procédé selon l'une quelconque des revendications précédentes, **caractérisé en ce que** seules sont comptées les amplitudes dans le signal de mesure dont le montant de différence par rapport à la moyenne du signal de mesure dépasse une valeur seuil prédéterminée.

5. Procédé selon l'une quelconque des revendications précédentes, **caractérisé en ce que** les intervalles de temps de comptage sont plus courts que la fréquence de rotation inverse.

6. Procédé selon la revendication 5, **caractérisé en ce que** les intervalles de temps de comptage à des moments prédéterminés commencent et finissent après le début d'un balayage de longueur d'ondes.

7. Procédé selon l'une quelconque des revendications précédentes, **caractérisé en ce qu'**un filtre optique sensible à la longueur d'ondes de façon modifiable est utilisé avec une largeur de bande de longueur d'ondes de préférence inférieure à 0,2, de préférence en outre à 0,1, de préférence par ailleurs inférieure à 0,05, de préférence en plus inférieure à 0,02 nanomètres.

8. Procédé selon l'une quelconque des revendications 1 à 6, **caractérisé en ce que** la lumière de laser découplée est acheminée à un interféromètre avec au moins deux longueurs de bras différentes, sachant qu'au moins un photodétecteur saisit au moins la lumière d'interférence à au moins une sortie de l'interféromètre.

9. Procédé selon la revendication 8, **caractérisé en ce que** l'interféromètre comporte deux longueurs de bras avec une différence de longueur de bras entre 3 et 150 millimètres.

10. Procédé selon l'une quelconque des revendications 7 à 9, **caractérisé en ce que** la saisie du signal de mesure a lieu avec une largeur de bande de détection inférieure à 6 GHz, de préférence inférieure à 4 GHz, en particulier de préférence inférieure à 2 GHz, tout particulièrement de préférence inférieure à 1 GHz.

11. Procédé selon l'une quelconque des revendications précédentes, **caractérisé en ce que** lors du dépassement d'une valeur de comptage maximale prédéterminée dans un intervalle de temps de comptage une régulation grossière est inversée jusqu'à ce que la valeur de comptage maximale soit à nouveau mise en dépassement inférieure.

12. Procédé selon l'une quelconque des revendications précédentes, **caractérisé par** une adaptation adaptative d'au moins un des paramètres de régulation suivants : durée et position des intervalles de temps de comptage, pas de progression de régulation, valeurs seuils de comptage, temps morts de comptage.

13. Procédé selon l'une quelconque des revendications précédentes, **caractérisé par** des mesures actives et/ou passives de stabilisation de température du résonateur.

14. Procédé selon l'une quelconque des revendications précédentes, **caractérisé en ce que** la lumière reflétée sur le filtre est utilisée pour la régulation.

15. Procédé selon l'une quelconque des revendications précédentes, **caractérisé en ce que** de la lumière est prélevée à des emplacements différents du résonateur et est placée en interférence.

Stand der Technik - Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2009174931 A1
- EP 2557441 A1

- US 7414779 B2
- US 8315282 B2

**In der Beschreibung aufgeführte Nicht-Patentliteratur**

- **DESMOND C. ADLER ; WOLFGANG WIESER ; FRANCOIS TREPANIER ; JOSEPH M. SCHMITT ; ROBERT A. HUBER.** Extended coherence length Fourier domain mode locked lasers at 1310 nm. *Opt. Express,* 2011, vol. 19, 20930-20939